(19)

**Europäisches Patentamt**
**European Patent Office**
**Office européen des brevets**

(11) **EP 4 600 219 A1**

(12) **EUROPEAN PATENT APPLICATION**

(43) Date of publication:
**13.08.2025 Bulletin 2025/33**

(21) Application number: **25152607.5**

(22) Date of filing: **17.01.2025**

(51) International Patent Classification (IPC):
**C01G 53/504** (2025.01)     **H01M 4/36** (2006.01)
**H01M 4/525** (2010.01)

(52) Cooperative Patent Classification (CPC):
**H01M 4/525; C01G 53/504; H01M 4/131;**
**H01M 4/1391; H01M 4/366; H01M 4/505;**
**H01M 10/0525**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.01.2024 KR 20240007649**

(71) Applicant: **SAMSUNG SDI CO., LTD.**
**Yongin-si, Gyeonggi-do 17084 (KR)**

(72) Inventors:
• **CHOO, Sung Ho**
**17084 Yongin-si (KR)**
• **KIM, Young-Ki**
**17084 Yongin-si (KR)**
• **KONG, Youngsun**
**17084 Yongin-si (KR)**

• **DOO, Sungwook**
**17084 Yongin-si (KR)**
• **YOON, Jaesang**
**17084 Yongin-si (KR)**
• **KANG, Seok Mun**
**17084 Yongin-si (KR)**
• **KANG, Gwiwoon**
**17084 Yongin-si (KR)**
• **JUN, Dowook**
**17084 Yongin-si (KR)**
• **KANG, Byungwuk**
**17084 Yongin-si (KR)**
• **JEONG, Jaeyong**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIALS, PREPARATION METHODS THEREOF, POSITIVE ELECTRODES, AND RECHARGEABLE LITHIUM BATTERIES**

(57)     A positive electrode active material including core particles including layered lithium nickel-manganese-based composite oxide, wherein each core particle is a secondary particle formed by agglomerating a plurality of primary particles, and a crystal size of the primary particle is about 105 nm to about 115 nm.

FIG. 12

EP 4 600 219 A1

## Description

## BACKGROUND

### 1. Field

Embodiments of the present disclosure described herein are related to positive electrode active materials, preparation methods of the positive electrode active materials, positive electrodes including the positive electrode active materials, and rechargeable lithium batteries including the positive electrodes.

### 2. Description of the Related Art

A portable information device such as a cell phone, a laptop, smart phone, and/or the like and/or an electric vehicle has used a rechargeable lithium battery having relatively high energy density and easy portability as a driving power source. Recently, research has been explored or conducted using a rechargeable lithium battery with relatively high energy density as a driving power source for hybrid or electric vehicles or as a power storage power source for energy storage systems or power walls.

Various positive electrode active materials have been used for rechargeable lithium batteries. For example, lithium nickel-based oxide, lithium nickel manganese cobalt-based composite oxide, lithium nickel cobalt aluminium-based composite oxide, and lithium cobalt-based oxide have been used as positive electrode active materials. However, while demands for large-sized, high-capacity, or high-energy-density rechargeable lithium batteries have increased, the supply of positive electrode active materials containing cobalt, a rare metal, may become insufficient. For example, because cobalt is expensive and there are not many remaining reserves, there is a need or desire to develop positive electrode active materials that exclude cobalt or reduce its content (e.g., amount).

## SUMMARY

Aspects according to one or more embodiments are directed toward a positive electrode active material including a layered lithium nickel-manganese-based composite oxide having economic feasibility, high capacity, and long cycle-life characteristics, and improved high-voltage and high-temperature characteristics, a preparation method thereof, and a positive electrode and a rechargeable lithium battery including the same.

Aspects according to one or more embodiments are directed toward a positive electrode active material that may maximize or increase capacity, while minimizing or reducing a production cost, to ensure long cycle-life characteristics and improve high-voltage characteristics and high-temperature characteristics. When the positive electrode active material is applied to a rechargeable lithium battery, high initial charge/discharge capacity and efficiency may be achieved under high-voltage operating conditions, and long cycle-life characteristics may be realized under high-voltage and high-temperature conditions.

Additional aspects will be set forth in part in the description which follows, and in part, will be apparent from the description, or may be learned by practice of the presented embodiments of the present disclosure.

In one or more embodiments, a positive electrode active material includes a core particle including a layered lithium nickel-manganese-based composite oxide, wherein the core particle is a secondary particle formed by agglomerating a plurality of primary particles, and a crystal size of the primary particles is about 105 nm to about 115 nm.

In one or more embodiments, a method of preparing a positive electrode active material includes mixing nickel-manganese-based composite hydroxide, and a lithium raw material to prepare a mixture; and heat-treating the mixture at a temperature of about 860 °C to about 870 °C in an oxygen atmosphere.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the positive electrode, a negative electrode, and an electrolyte.

At least some of the above and other features of the invention are set out in the claims.

## BRIEF DESCRIPTION OF THE DRAWINGS

FIGS. 1-4 are schematic diagrams each showing a rechargeable lithium battery according to one or more embodiments.

FIG. 5 is a SEM-EDS image of the positive electrode active material according to Example 2.

FIG. 6 is an SEM image of the positive electrode active material according to Example 1.

FIG. 7 is an SEM image of the positive electrode active material according to Example 2.

FIG. 8 is an SEM image of the positive electrode active material according to Example 3.

FIG. 9 is an SEM image of the positive electrode active material according to Comparative Example 1.

FIG. 10 is an SEM image of the positive electrode active material according to Comparative Example 2.

FIG. 11 is an SEM image of the positive electrode active material according to Comparative Example 3.

FIG. 12 is a graph showing the high-temperature storage characteristics of rechargeable lithium battery cells including positive electrode active materials according to Examples 1 to 3 and Comparative Examples 1 to 3.

## DETAILED DESCRIPTION

Hereinafter, specific embodiments will be described in more detail so that those of ordinary skill in the art can easily implement them. However, this disclosure may be embodied in many different forms and is not construed as limited to the example embodiments set forth herein.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The terminology used herein is used to describe embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied aspect, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface.

The average particle diameter may be measured by a method suitable to those skilled in the art, for example, by a particle size analyzer, or by a transmission electron microscopic image or a scanning electron microscopic image. In one or more embodiments, it is possible to obtain an average particle diameter value by measuring using a dynamic light scattering method, performing data analysis, counting the number of particles for each particle size range, and calculating from this. Unless otherwise defined, the average particle diameter ($D_{50}$) may refer to the diameter of particles having a cumulative volume of 50 volume% in the particle size distribution. As used herein, if (e.g., when) a definition is not otherwise provided, the average particle diameter ($D_{50}$) refers to a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within $\pm$ 30%, $\pm$ 20%, $\pm$10%, or $\pm$ 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

In the context of the present application and unless otherwise defined, the terms "use," "using," and "used" may be considered synonymous with the terms "utilize," "utilizing," and "utilized," respectively. Further, the use of "may" when describing embodiments of the present invention refers to "one or more embodiments of the present invention."

Hereinbelow, a positive electrode active material for a rechargeable lithium battery, a rechargeable lithium battery including the positive electrode active material, and a method of preparing a positive electrode active material for a rechargeable lithium battery according to one or more embodiments will be described in greater detail.

**Positive Electrode Active Material**

In one or more embodiments, a positive electrode active material includes core particles including layered lithium nickel-manganese-based composite oxide, wherein each core particle is a secondary particle formed by agglomerating a plurality of primary particles, and a crystal size of the primary particle is about 105 nm to about 115 nm.

As the price of cobalt, a rare metal, has risen, there is a demand for the development of positive electrode active materials that exclude cobalt or reduce its content (e.g., amount). A positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like has a limitation in realizing high capacity due to a small available lithium amount within the structure. The layered lithium nickel-manganese-based positive electrode active material has excellent or suitable capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes more difficult to secure long cycle-life characteristics. In addition, the layered lithium nickel-manganese-based positive electrode active material, from which cobalt is excluded, may rather have a problem of accelerated side reaction with an electrolyte under high-voltage and high-temperature conditions, resultantly increasing gas generation and deteriorating cycle-life characteristics.

Accordingly, in order to maintain a stable layered structure even if the cobalt element is excluded from the structure of the layered lithium nickel-manganese-based positive electrode active material and to improve stability in a high-voltage region, in one or more embodiments, the crystal size of the particles included in the layered lithium nickel-manganese-based positive electrode active material is controlled or selected to improve not only the high-voltage, high-temperature cycle-life characteristics but also the initial charge and discharge efficiency.

**Core Particles**

The core particles include layered lithium nickel-manganese-based composite oxide.

A nickel content (e.g., amount) may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in the layered lithium nickel-manganese-based composite oxide. If the nickel content (e.g., amount) satisfies the above ranges, high capacity may be achieved and structural stability may be increased even if the cobalt content (e.g., amount) is reduced. The nickel is contained in the core particles, but may move to some of the coating layers during the coating process, and therefore, the nickel content (e.g., amount) may refer to a nickel content (e.g., amount) contained in the entire positive electrode active material.

A manganese content (e.g., amount) may be, for example, greater than or equal to about 10 mol%, for example, about 10 mol% to about 40 mol%, about 15 mol% to about 35 mol%, about 15 mol% to about 30 mol%, or about 20 mol% to about 30 mol% based on 100 mol% of a total metal excluding lithium in the layered lithium nickel-manganese-based composite oxide. If the manganese content (e.g., amount) satisfies the above ranges, the positive electrode active material may improve structural stability while realizing high capacity. The manganese is contained in the core particles, but may move to some of the coating layers during the coating process, and therefore, the manganese content (e.g., amount) may refer to a manganese content (e.g., amount) contained in the entire positive electrode active material.

For example, the lithium nickel-manganese-based composite oxide may be a lithium nickel-manganese-aluminium-based composite oxide that further contains aluminium in addition to nickel and manganese. When the lithium nickel-manganese-based composite oxide contains aluminium, it is desirable to maintain a stable layered structure even if the cobalt element is excluded from the structure. An aluminium content (e.g., amount) based on 100 mol% of a total metal excluding lithium of the lithium nickel-manganese-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. If the aluminium content (e.g., amount) satisfies the above ranges, a stable layered structure may be maintained even if cobalt is excluded from the core particles, the problem of structure collapse due to charging and discharging may be suppressed or reduced, and long cycle-life characteristics of the positive electrode active material may be realized.

According to one or more embodiments, the concentration of aluminium within the core particle may be substantially uniform. For example, there is not a concentration gradient of aluminium from the center to the surface within the core particle, or the aluminium concentration in the internal portion of the core particle is neither higher nor lower than in the external portion, and the aluminium within the core particle is evenly distributed. This may be a structure obtained by using an aluminium raw material during precursor production without additional doping of aluminium during the synthesis of the core particles and thereby synthesizing a composite oxide using nickel-manganese-aluminium-based hydroxide as a precursor. The core particles may include (e.g., be in a form of) a secondary particle in which a plurality of primary particles are agglomerated, and the aluminium content (e.g., amount) inside the primary particle may be the same or similar regardless of the location of the primary particle. For example, if a primary particle is selected at a random position in the cross-section of a secondary particle and the aluminium content (e.g., amount) is measured inside the primary particle rather than at its interface, regardless of the location of the primary particle, that is, whether the primary particle is close to the center of the secondary particle or close to the surface, the aluminium content (e.g., amount) may be the same/similar/substantially uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

The lithium nickel-manganese-based composite oxide may be a cobalt-free compound that does not contain cobalt or contains a very small amount of cobalt, and a cobalt content (e.g., amount) may be less than or equal to about 0.01 mol%, less than or equal to about 0.005 mol%, or less than or equal to about 0.001 mol%, for example, about 0 mol% to about 0.01 mol%, about 0 mol% to about 0.005 mol%, or about 0 mol% to about 0.001 mol% based on 100 mol% of a total metal excluding lithium in the lithium nickel-manganese-based composite oxide.

The lithium nickel-manganese-based composite oxide may be, for example, represented by Chemical Formula 1.

$$\text{Chemical Formula 1} \qquad Li_{a1}Ni_{x1}Mn_{y1}Al_{z1}M^1_{w1}O_{2-b1}X_{b1}$$

In Chemical Formula 1, $0.9 \leq a1 \leq 1.8$, $0.6 \leq x1 \leq 0.8$, $0.1 \leq y1 \leq 0.4$, $0 \leq z1 \leq 0.03$, $0 \leq w1 \leq 0.3$, $0.9 \leq x1+y1+z1+v1+w1 \leq 1.1$, and $0 \leq b1 \leq 0.1$, $M^1$ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

In Chemical Formula 1, for example, $0.9 \leq a1 \leq 1.5$, or $0.9 \leq a1 \leq 1.2$. In addition, Chemical Formula 1 may contain aluminium, in which case $0.6 \leq x1 \leq 0.8$, $0.1 \leq y1 \leq 0.39$, $0.01 \leq z1 \leq 0.03$, and $0 \leq w1 \leq 0.29$, for example, $0.6 \leq x1 \leq 0.8$, $0.1 \leq y1 \leq 0.39$, $0.01 < z1 \leq 0.03$, and $0 \leq w1 \leq 0.29$.

In Chemical Formula 1, for example, $0.6 \leq x1 \leq 0.79$, $0.6 \leq x1 \leq 0.78$, $0.6 \leq x1 \leq 0.75$, $0.65 \leq x1 \leq 0.8$, or $0.7 \leq x1 \leq 0.79$, $0.1 \leq y1 \leq 0.35$, $0.1 \leq y1 \leq 0.30$, $0.1 \leq y1 \leq 0.29$, $0.15 \leq y1 \leq 0.39$, or $0.2 \leq y1 \leq 0.3$, $0.01 \leq z1 \leq 0.025$, $0.01 < z1 \leq 0.02$, or $0.01 < z1 \leq 0.019$, and $0 \leq w1 \leq 0.28$, $0 \leq w1 \leq 0.27$, $0 \leq w1 \leq 0.26$, $0 \leq w1 \leq 0.25$, $0 \leq w1 \leq 0.24$, $0 \leq w1 \leq 0.23$, $0 \leq w1 \leq 0.22$, $0 \leq w1 \leq 0.21$, $0 \leq w1 \leq 0.2$, $0 \leq w1 \leq 0.15$, $0 \leq w1 \leq 0.1$, or $0 \leq w1 \leq 0.09$.

The core particles include (e.g., may be in the form of) secondary particles made by agglomerating a plurality of primary particles. The secondary particles may be spherical, elliptical, polyhedral, or irregular in shape and the primary particles may be spherical, elliptical, plate-shaped, and/or a (e.g., any suitable) combination thereof. Herein, the average particle diameter ($D_{50}$) of the primary particles may be about 100 nm to about 500 nm, for example, about 100 nm to about 400 nm, about 100 nm to about 300 nm, or about 100 nm to about 200 nm. The average particle diameter ($D_{50}$) of the secondary particles may be about 10 $\mu$m to about 25 $\mu$m, for example, about 11 $\mu$m to about 20 $\mu$m, or about 12 $\mu$m to about 18 $\mu$m. As used herein, if (e.g., when) a definition is not otherwise provided, the average particle diameter ($D_{50}$) refers to a diameter of particles having a cumulative volume of 50 volume% in the particle size distribution that is obtained by measuring the size (diameter or major axis length) of about 20 particles at random in a scanning electron microscope image for positive electrode active materials. If the average particle diameter of the core particles satisfies the above ranges, high capacity and long cycle-life may be realized and it may be desirable to form a coating layer according to one or more embodiments. Also, in the present disclosure, when the particles are spherical, "diameter" indicates a particle diameter or an average particle diameter, and when the particles are non-spherical, the "diameter" indicates a major axis length or an average major axis length.

The primary particles may be polycrystalline primary particles, which are characterized to have a crystal size of about 105 nm to about 115 nm. As the crystal size of the primary particles decreases, a volume of the secondary particles may decrease approximately in proportion to its cube, but if (e.g., when) the crystal size is adjusted within the range, the volume change of the secondary particles may be minimized or reduced during the charge and discharge, which may minimize or reduce cracks and thus increase cycle-life and concurrently (e.g., simultaneously), improve storage characteristics at a high temperature.

The crystal size of the primary particles may be measured in an X-ray diffraction analysis method, for example, at an acceleration voltage/current of 40 kV/40 mA at a scan speed of 0.01 °/sec within a 2θ range of 10° to 70° by using Cu-Kα rays (a wavelength = 1.54 Å) in the X-ray diffraction spectrum and calculated according to Equation 1.

$$\text{Crystal size (nm)} = K\lambda/\beta\cos\theta$$

Equation 1

In Equation 1, K is about 0.9, λ is about 1.54 Å, β is a full width at half maximum (FWHM) fitted to a Lorentzian function, and θ is a Bragg angle at the peak fitted to the Lorentzian function.

The crystal size of the primary particles may refer to a crystal size calculated from peaks fitted to the Lorentzian function satisfying Bragg's law within a range of about 10° to about 90°.

The core particle is susceptible to chemical attacks from components in an electrolyte, if (e.g., when) a battery is operated under high-voltage or high-temperature conditions, and thus may have lots of side reactions with the electrolyte, resulting in increasing an amount of gas generation and thereby, deteriorating battery cycle-life and safety, but these problems may be solved by introducing a coating layer according to one or more embodiments which will be described in more detail later, thereinto.

## Coating Layer

The positive electrode active material according to one or more embodiments may further include a coating layer located on the surface of the core particle and containing aluminium. Because the core particles have been described above, they will not be provided and the coating layer will be described in more detail.

The aluminium content (e.g., amount) of the coating layer may be about 5 at% to about 10 at%, for example, about 5.5 at% to about 10 at%, or about 6 at% to about 10 at% based on a total of 100 at% of nickel, manganese, and aluminium of the coating layer measured by energy profiling energy dispersive spectroscopy (EP-EDS) on the surface of the positive electrode active material. The aluminium content (e.g., amount) of the coating layer refers only to a content (e.g., amount) of aluminium contained in the coating layer, regardless of the aluminium contained in the core particles. If the aluminium content (e.g., amount) in the coating layer satisfies the range, the coating layer may have a substantially uniform and thin thickness, which may not increase resistance of the positive electrode active material and effectively suppress or reduce a side reaction with the electrolyte and thereby, improving cycle-life characteristics of a rechargeable lithium battery under high-voltage and high-temperature conditions. For example, if the aluminium content (e.g., amount) of the coating layer is excessive, a substantially uniform coating layer may not be formed or resistance may increase, which may reduce charge/discharge efficiency and cycle-life characteristics, and if the aluminium content (e.g., amount) of the coating layer is too small, a coating layer of an appropriate or suitable thickness is not formed and an effect of suppressing or reducing side reactions with the electrolyte may be reduced.

The coating layer according to one or more embodiments may be, for example, in the form of a film that continuously surrounds the surface of the core particle, or may be in the form of a shell that surrounds the entire surface of the core particle. This is distinct from a structure in which only a portion of the surface of the core particle is partially coated. According to one or more embodiments, the coating layer may be formed to entirely cover the surface of the core particle and may be formed to be very thin and substantially uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

The coating layer according to one or more embodiments may have a thickness of about 30 nm to about 500 nm, for example, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be measured through, for example, TOF-SIMS, XPS, or EDS analysis, and the thickness range of the coating layer may be measured through TEM-EDS line profile.

The coating layer according to one or more embodiments is characterized by being thin and substantially uniform in thickness, at the level of tens to hundreds of nanometers. For example, the deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges refers to that a coating layer of substantially uniform thickness is formed in a good or suitable film on the surface of the core particle of the positive electrode active material. Accordingly, the structural stability of the positive electrode active material is improved, side reactions with the electrolyte may be effectively suppressed or reduced, and the increase in resistance or decrease in capacity due to coating may be minimized or reduced.

In one or more embodiments, the coating layer may further contain nickel, manganese, and/or a (e.g., any suitable) combination thereof in addition to aluminium. The nickel and manganese may have been contained in the core particles and may have been introduced during the coating layer formation process, and their contents are not particularly limited. The coating layer according to one or more embodiments contains aluminium while optionally containing nickel and manganese, and is formed to be thin and substantially uniform in thickness, thereby improving the high-voltage characteristics of the positive electrode active material and improving the cycle-life characteristics.

Additionally, the coating layer may further contain sulfur in addition to aluminium. The sulfur may be introduced during the process of adding aluminium sulfate among the aluminium raw materials used to form the aluminium coating layer, and its content (e.g., amount) is not particularly limited. The coating layer according to one or more embodiments contains aluminium and optionally contains sulfur, and can improve the high-voltage characteristics and cycle-life characteristics of the positive electrode active material.

Additionally, in one or more embodiments, another positive electrode active material may not contain sodium. In general, sodium ions can be used in the preparing process of a positive electrode active material, but according to the preparing method described in more detail later, core particles with a stable structure and a coating layer of substantially uniform thickness can be formed without using sodium ions.

## Method of Preparing Positive Electrode Active Material

In one or more embodiments, a method of preparing a positive electrode active material includes mixing nickel-manganese-based composite hydroxide, and a lithium raw material to prepare a mixture; and heat-treating the mixture at a temperature of about 860 °C to about 870 °C in an oxygen atmosphere.

The nickel-manganese-based composite hydroxide may be a precursor of core particles, may include (e.g., may be in the form of) secondary particles in which a plurality of primary particles are agglomerated, may not contain cobalt or may contain a very small amount, and may be, for example, nickel-manganese-based composite hydroxide. The nickel-manganese-based composite hydroxide may be prepared by a general coprecipitation method.

The nickel content (e.g., amount) of the nickel-manganese-based composite hydroxide may be greater than or equal to about 60 mol% and, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. If the nickel content (e.g., amount) satisfies the ranges, high capacity may be achieved and structural stability may be increased even if the cobalt content (e.g., amount) is reduced.

The manganese content (e.g., amount) of the nickel-manganese-based composite hydroxide may be greater than or equal to about 10 mol%, for example, about 10 mol% to about 40 mol%, about 15 mol% to about 35 mol%, about 15 mol% to about 30 mol%, or about 20 mol% to about 30% based on 100 mol% of a total metal in the nickel-manganese-based composite hydroxide. If the manganese content (e.g., amount) in the nickel-manganese-based composite hydroxide satisfies the above ranges, high capacity may be realized while structural stability of the positive electrode active material may be increased, and production price may be lowered to increase economic efficiency.

In addition, if (e.g., when) the nickel-manganese-based composite hydroxide further contains aluminium, the aluminium content (e.g., amount) of the nickel-manganese-based composite hydroxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-based composite hydroxide. If the aluminium content (e.g., amount) in the nickel-manganese-based composite hydroxide satisfies the above range, high capacity may be realized while structural stability of the positive electrode active material may be increased, and production price may be lowered to increase economic efficiency.

In a method for preparing a positive electrode active material according to one or more embodiments, in the preparation of core particles, aluminium is not additionally doped, but an aluminium raw material may be used to prepare a precursor, so that a nickel-manganese-aluminium-based composite hydroxide, in which aluminium is uniformly (e.g.,

substantially uniformly) dispersed in the structure, is used as the precursor. When such a precursor is used, the positive electrode active material may stably maintain a layered structure without cobalt despite repeated charges and discharges, and aluminium byproducts or aluminium aggregates may not be formed, improving capacity and efficiency characteristics and cycle-life characteristics of the positive electrode active material.

In the nickel-manganese-based composite hydroxide, the cobalt content (e.g., amount) may be less than or equal to about 0.01 mol%, less than or equal to about 0.005 mol%, or less than or equal to about 0.001 mol%, for example about 0 mol% to about 0.01 mol%, about 0 mol% to about 0.005 mol%, or about 0 mol% to about 0.001 mol% based on 100 mol% of a total metal in the nickel-manganese-based composite hydroxide. This nickel-manganese-based composite hydroxide may be economical as it avoids the increase in unit cost caused by cobalt, maximizes capacity, and improves structural stability.

For example, the nickel-manganese-based composite hydroxide may be represented by Chemical Formula 2.

$$\text{Chemical Formula 2} \qquad Ni_{x2}Mn_{y2}Al_{z2}M^2{}_{w2}(OH)_2$$

In Chemical Formula 2, $0.6 \leq x2 \leq 0.8$, $0.1 \leq y2 \leq 0.4$ $0 \leq z2 \leq 0.03$, $0 \leq w2 \leq 0.3$, and $0.9 \leq x2+y2+z2+w2 \leq 1.1$, and $M^2$ is one or more elements selected from among B, Ba, Ca, Ce, Cr, Fe, Mg, Mo, Nb, Si, Sn, Sr, Ti, V, W, Y, and Zr.

In Chemical Formula 2, for example, $0.6 \leq x2 \leq 0.8$, $0.1 \leq y2 \leq 0.39$, $0.01 \leq z2 \leq 0.03$, and $0 \leq w2 \leq 0.29$.

The nickel-manganese-based composite hydroxide includes (e.g., is in the form of) particles, and the average particle diameter ($D_{50}$) of the particles may be about 10 $\mu$m to about 25 $\mu$m, about 11 $\mu$m to about 20 $\mu$m, or about 12 $\mu$m to about 18 $\mu$m.

The nickel-manganese-based composite hydroxide and lithium raw material may be mixed at a molar ratio of about 1:0.9 to about 1:1.8, for example, about 1:0.9 to about 1:1.5 or about 1:1 to about 1:1.2.

The heat treatment may be performed under an oxygen atmosphere, for example, within a temperature range of about 860 °C to about 870 °C for about 2 hours to about 20 hours or about 4 hours to about 12 hours. If the heat treatment temperature is within the range, the primary particles may have a crystal size of about 105 nm to about 115 nm, and if the crystal size is controlled or selected within the range, the volume change of the particles may be minimized or reduced during the charge and discharge, which may minimize or reduce cracks and thus increase a cycle-life and concurrently (e.g., simultaneously), improve storage characteristics at a high temperature.

Through the above heat treatment, the layered lithium nickel-manganese-based composite oxide may be obtained. The obtained layered lithium nickel-manganese-based composite oxide may contain about 60 mol% to about 80 mol% of nickel, and does not contain cobalt or contains cobalt in a very small amount of less than or equal to about 0.01 mol% based on 100 mol% of a total metal excluding lithium in the layered lithium nickel-manganese-based composite oxide may be obtained. Because the layered lithium nickel-manganese-based composite oxide may have significantly different residual lithium contents on the particle surface and different characteristics from oxides with a different composition, for example, nickel-based oxides such as lithium nickel-cobalt-manganese-based composite oxide, lithium nickel-cobalt-aluminium-based composite oxide, and/or the like, it is impossible or difficult to form a satisfactory coating layer in the form of a substantially uniform film in a coating method used in the art. In one or more embodiments, a method is proposed to improve high-voltage and high-temperature characteristics by uniformly (e.g., substantially uniformly) forming a coating layer with a very thin thickness on the surface of the lithium nickel-manganese-based composite oxide with a very small amount of cobalt and a nickel content (e.g., amount) of greater than or equal to about 60 mol%.

In one or more embodiments, a coating solution is first prepared by adding an aluminium raw material to an aqueous solvent, the obtained positive electrode active material including the lithium nickel-manganese-based composite oxide is added and mixed and then drying and a second heat treatment are performed to form a coating layer according to one or more embodiments. This is a salt-solution wet coating method and can be referred to a pre-addition method in which the salt, which is the coating raw material, is first completely dissolved and then the core particles of the positive electrode active material are added.

The aqueous solvent may include distilled water, alcohol-based solvent, and/or a (e.g., any suitable) combination thereof. For example, the aluminium raw material may be aluminium sulfate. The aluminium sulfate may be referred to as an optimal or suitable raw material for forming a substantially uniform aluminium coating layer on layered lithium nickel-manganese-based composite oxide. The aluminium raw material is a raw material for forming a coating layer, and the aluminium content (e.g., amount) of the aluminium raw material may be about 5 at% to about 10 at%, for example, about 5.5 at% to about 10 at%, or about 6 at% to about 10 at% based on 100 at% of the total nickel, manganese, and aluminum measured by EP-EDS on the surface of the finally obtained positive electrode active material. If the contents of the coating raw materials are designed within the above ranges, the coating layer may be formed to have a thin and substantially uniform thickness of tens to hundreds of nanometers, reducing an amount of gas generated by rechargeable lithium batteries under high-voltage or high-temperature operation conditions and improving high-capacity and long cycle-life characteristics.

The coating solution obtained by mixing the aluminium raw material in the aqueous solvent may have a pH of about 1.5 to about 3.5, for example, about 2.0 to about 3.4, about 2.5 to about 3.3, about 2.7 to about 3.3, or about 2.9 to about 3.2.

The adding and mixing of the core particles of positive electrode active material to the coating solution may be performed for about 5 minutes to about 80 minutes, about 5 minutes to about 60 minutes, or about 5 minutes to about 40 minutes. The pH of the mixed solution after stirring may be about 4.5 to about 8.5, for example, about 5.0 to about 8.0, about 5.5 to about 7.5, or about 6.0 to about 7.0. If these conditions are satisfied, it is desirable to form a coating layer of substantially uniform thickness.

The drying after the mixing process may be understood as a process of removing the solvent, and may be performed, for example, at about 40 °C to about 240 °C, about 100 °C to about 220 °C, or about 150 °C to about 200 °C.

If the heat treatment to the mixture obtained by mixing the nickel-manganese-based composite hydroxide and lithium raw material is expressed as a first heat treatment, the heat treatment after drying the product obtained by removing the solvent from the mixed solution may be referred to as a second heat treatment. The second heat treatment may be understood as a process of forming a coating layer, for example, in an oxygen atmosphere at a temperature range of about 700 °C to about 850 °C, about 750 °C to about 840 °C, or about 800 °C to about 830 °C for about 2 hours to about 20 hours, or about 3 hours to about 10 hours. In addition, the second heat treatment temperature may be lower than the first heat treatment temperature, and the second heat treatment time may be the same as or shorter than the first heat treatment time. The desired or suitable coating layer can be obtained by performing a second heat treatment under these conditions.

**Positive Electrode**

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the aforementioned positive electrode active materials. Additionally, the positive electrode active material layer may optionally further include a binder, a conductive material, and/or a (e.g., any suitable) combination thereof.

According to one or more embodiments, a loading level of the positive electrode active material layer may be about 10 mg/cm$^2$ to about 40 mg/cm$^2$, for example, about 10 mg/cm$^2$ to about 30 about mg/cm$^2$, or about 10 mg/cm$^2$ to about 20 mg/cm$^2$. Additionally, a density of the positive electrode active material layer in the final compressed positive electrode may be about 3.3 g/cc to about 3.7 g/cc, for example, about 3.3 g/cc to about 3.6 g/cc or about 3.4 g/cc to about 3.58 g/cc. When applying the positive electrode active material according to one or more embodiments, it is advantageous to implement such a loading level and positive electrode density, and a positive electrode that satisfies the loading level and positive electrode density in the above range is suitable for implementing a high-capacity, high-energy-density rechargeable lithium battery.

**Binder**

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

**Conductive Material**

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al, but the present disclosure is not limited thereto.

## Rechargeable Lithium Battery

Some embodiments provide a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte.

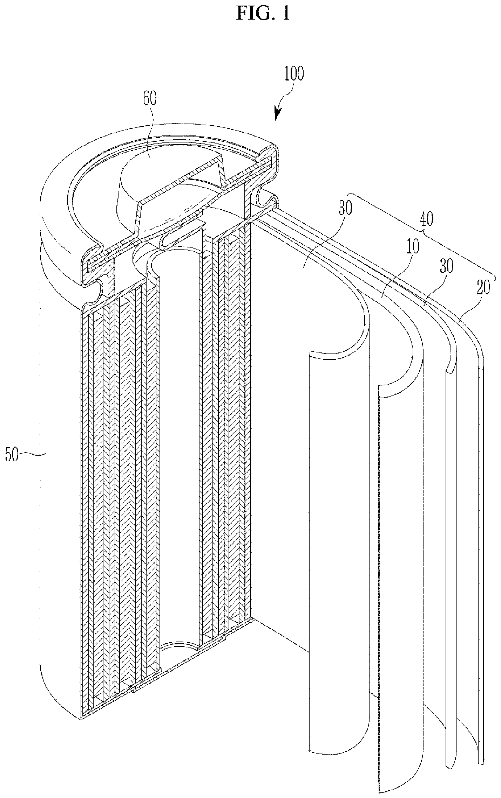

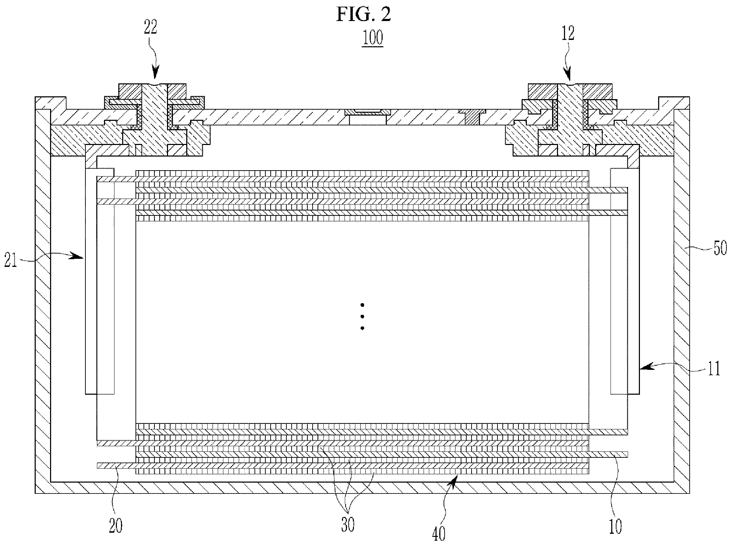

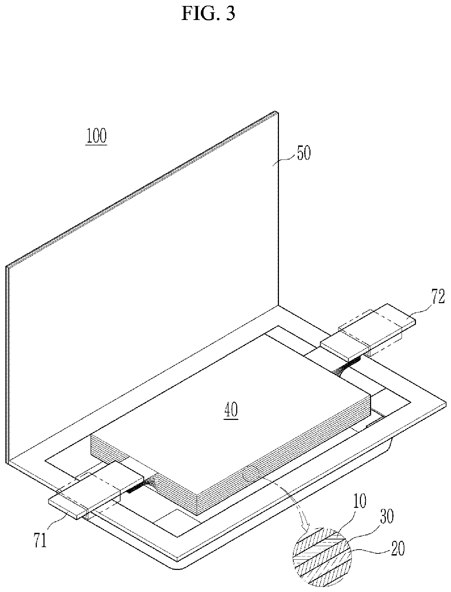

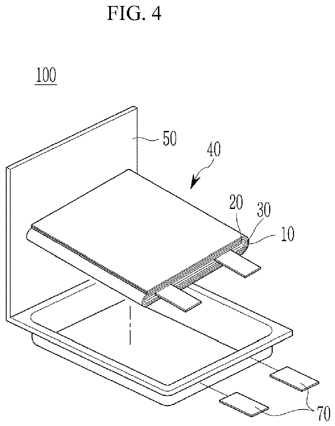

The rechargeable lithium battery may be classified into cylindrical, prismatic, pouch, coin, and/or the like depending on the shape. FIGS. 1 to 4 are schematic diagrams each showing the rechargeable lithium battery according to one or more embodiments, where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to one or more embodiments may be rechargeable at a high voltage or may be suitable for being driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery can significantly reduce an amount of gas generated even if (e.g., when) charged at high voltage and can achieve high capacity and long cycle-life characteristics.

## Negative Electrode

The negative electrode may include a current collector and a negative electrode active material layer on the current collector, and the negative electrode active material layer may include a negative electrode active material, and may further include a binder, a conductive material, and/or a (e.g., any suitable) combination thereof.

## Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOx ($0 < x \leq 2$) (e.g., $SnO_2$), a Sn alloy, and/or a (e.g., any suitable) combination thereof.

The silicon-carbon composite may be a composite of silicon and amorphous carbon. An average particle diameter ($D_{50}$) of the silicon-carbon composite particles may be, for example, about 0.5 $\mu$m to about 20 $\mu$m. According to one or more embodiments, the silicon-carbon composite may include (e.g., may be in the form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In addition, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, or in an oxidized form. The oxidized form of silicon may be represented by $SiO_x$ (0<x<2). The atomic content (e.g., amount) ratio of Si:O, which indicates a degree of oxidation, may be about 99:1 to about 33:67. As used herein, if (e.g., when) a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

**Binder**

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

**Conductive Material**

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

**Current Collector**

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

**Electrolyte**

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance, which is suitable to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth) acrylamide, and a second structural unit including at least one of a structural unit derived from (meth)acrylic acid or (meth) acrylate, or a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and/or a (e.g., any suitable) combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described. However, the following examples are only examples of the present disclosure, and the present disclosure is not limited to the following examples.

**Example 1**

**1. Preparation of Positive Electrode Active Material**

$Ni_{0.75}Mn_{0.23}Al_{0.02}(OH)_2$, and LiOH were mixed at a molar ratio of 1:1 and subjected to a first heat treatment at 860 °C for 8 hours in an oxygen atmosphere to obtain a lithium nickel-manganese-based composite oxide having a composition of $LiNi_{0.75}Mn_{0.23}Al_{0.02}O_2$ and in the form of secondary particles having an average particle diameter ($D_{50}$) of about 14 $\mu$m.

A coating solution was prepared by adding aluminium sulfate with 600 g of distilled water to a 1 L reactor and then, stirring the mixture at about 350 rpm for about 5 minutes to dissolve the salts. Here, the content of aluminum in the aluminum sulfate was designed to be 9.3 at% with respect to the total 100 at% of nickel, manganese, and aluminum measured by EP-EDS on the surface of the final positive electrode active material. As the salts were completely dissolved, the coating solution was checked to be colorless transparent. Subsequently, 500 g of the lithium nickel-manganese-based composite oxide was added to the coating solution, which was being stirred, for 1.5 minutes and then, kept being stirred for about 30 minutes.

After removing the solvent from the mixed solution by using an aspirator and filter press, a coated product was obtained through vacuum drying at 190 °C.

The coated product was secondarily heat-treated at 825 °C for 8 hours under an oxygen atmosphere to obtain the final positive electrode active material.

**2. Manufacturing of Rechargeable Lithium Battery Cell**

98.5 wt% of the positive electrode active material, 1.0 wt% of a polyvinylidene fluoride binder, and 0.5 wt% of a carbon nanotube conductive material were mixed to prepare positive electrode active material layer slurry, and the positive electrode active material layer slurry was coated on an aluminium foil current collector and then, dried and compressed to manufacture a positive electrode. Herein, a loading level of the positive electrode active material layer was 10 mg/cm$^2$, and a density of the finally compressed positive electrode active material layer was about 3.4 g/cc.

97.5 wt% of a graphite negative electrode active material, 1.5 wt% of carboxymethyl cellulose, and 1 wt% of a styrene butadiene rubber were mixed in a water solvent to prepare a negative electrode active material layer slurry. The negative electrode active material layer slurry was coated on a copper foil current collector, drying, and compressing to manufacture a negative electrode.

Subsequently, the positive electrode was used with a lithium metal as a counter electrode and a polytetrafluoroethylene separator, and in addition, an electrolyte prepared by dissolving 1 M $LiPF_6$ in a mixed solvent of ethylene carbonate and dimethyl carbonate in a volume ratio of 3:7 was used to manufacture a rechargeable lithium battery cell in a common method.

### Example 2

A positive electrode active material and a rechargeable lithium battery cell were manufactured in substantially the same manner as in Example 1 except that the first heat treatment of the mixture of $Ni_{0.75}Mn_{0.23}Al_{0.02}(OH)_2$ and LiOH was performed at 865 °C in preparing the positive electrode active material.

### Example 3

A positive electrode active material and a rechargeable lithium battery cell were manufactured in substantially the same manner as in Example 1 except that the first heat treatment of the mixture of $Ni_{0.75}Mn_{0.23}Al_{0.02}(OH)_2$, and LiOH was performed at 870 °C.

### Comparative Example 1

A positive electrode active material and a rechargeable lithium battery cell were manufactured substantially in substantially the same manner as in Example 1 except that the first heat treatment of the mixture of $Ni_{0.75}Mn_{0.23}Al_{0.02}(OH)_2$ and LiOH was performed at 855 °C.

### Comparative Example 2

A positive electrode active material and a rechargeable lithium battery cell were manufactured in substantially the same manner as in Example 1 except that the first heat treatment of the mixture of $Ni_{0.75}Mn_{0.23}Al_{0.02}(OH)_2$ and LiOH was performed at 875 °C.

### Comparative Example 3

A positive electrode active material and a rechargeable lithium battery cell were manufactured in substantially the same manner as in Example 1 except that the first heat treatment of the mixture of $Ni_{0.75}Mn_{0.23}Al_{0.02}(OH)_2$, and LiOH was performed at 880 °C.

### Evaluation Example 1: Crystal Size Analysis of Particles

The positive electrode active materials of Examples 1 to 3 and Comparative Examples 1 to 3 were checked with respect to a crystal size through X-ray diffraction analysis (XRD). In the X-ray diffraction spectra measured by XRD, the crystal size was measured by using Cu-K$\alpha$ rays (a wavelength: 1.54 Å) at an acceleration voltage/current of 40 kV/40 mA at a scan speed of 0.01 °/sec within a 2θ range of 10° to 70° and calculated according to Equation 1, and the results are shown in Table 1.

Equation 1

$$\text{Crystal size (nm)} = K\lambda/\beta\cos\theta$$

In Equation 1, K is 0.9, $\lambda$ is 1.54 Å, $\beta$ is a full width at half maximum (FWHM) at a peak fitted to a Lorentzian function, and $\theta$ is a Bragg angle at the peak fitted to the Lorentzian function.

Table 1

|  | First heat-treatment temperature (°C) | Crystal size (nm) |
|---|---|---|
| Comparative Example 1 | 855 | 101.1 |
| Example 1 | 860 | 105.6 |
| Example 2 | 865 | 109.8 |
| Example 3 | 870 | 114.4 |
| Comparative Example 2 | 875 | 120.2 |
| Comparative Example 3 | 880 | 126.3 |

Referring to Table 1, the higher the first heat treatment temperature, the larger the crystal size. Examples 1 to 3 had primary particles satisfying a crystal size range of 105 nm to 115 nm, but Comparative Examples 1 to 3 had primary particles out of the range.

**Evaluation Example 2: Analysis of Aluminium Coating of Positive Electrode Active Material**

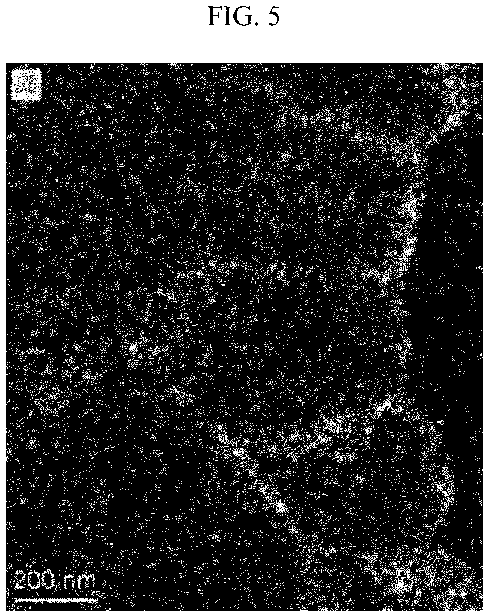

The positive electrode active material of Example 2 was checked with respect to an aluminium coating state through SEM-EDS (scanning electron microscopy (SEM) and energy dispersive X-ray spectroscopy (EDS)) mapping, and the results are shown in FIG. 5. Referring to FIG. 5, aluminium was coated on the positive electrode active material surface, which strengthened structural stability and improved electrochemical performance at a high voltage.

**Evaluation Example 3: Surface Analysis of Positive Electrode Active Material**

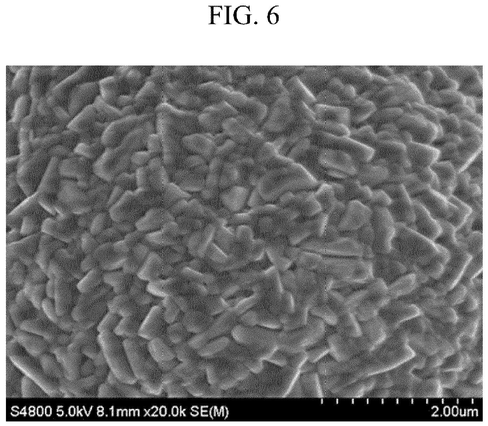

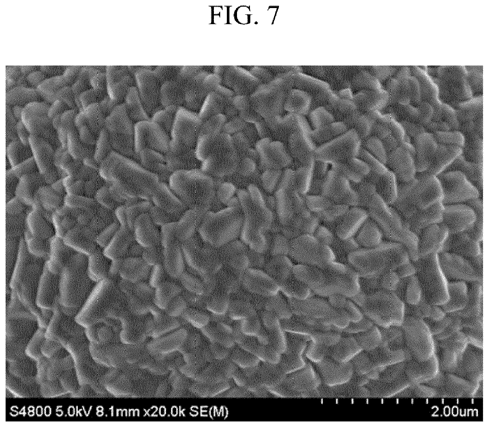

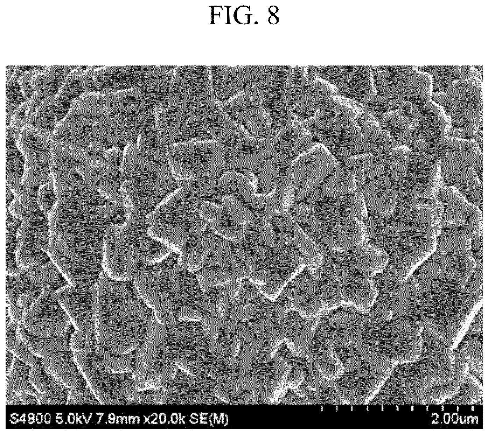

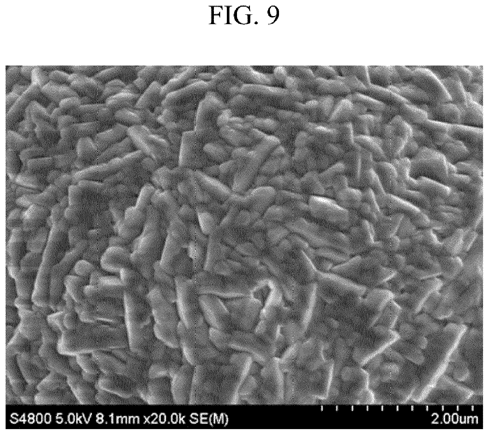

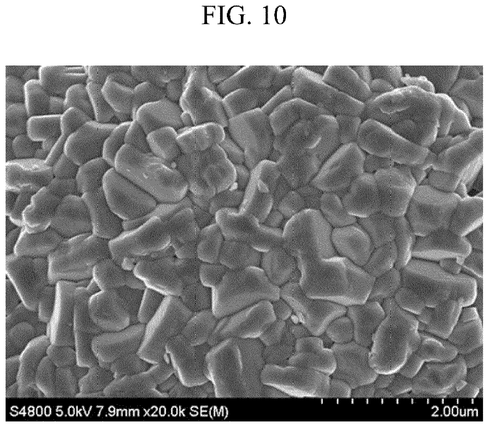

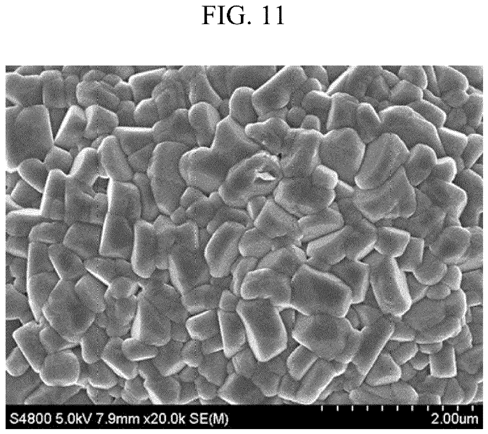

The positive electrode active materials of Examples 1 to 3 and Comparative Examples 1 to 3 were compared by taking a scanning electron microscope (SEM) image. FIG. 6 is an SEM image of the surface of the final positive electrode active material prepared in Example 1, FIG. 7 is an SEM image of the surface of the final positive electrode active material prepared in Example 2, and FIG. 8 is a SEM image of the surface of the final positive electrode active material prepared in Example 3. In addition, FIG. 9 is an SEM image of the surface of the final positive electrode active material manufactured in Comparative Example 1, FIG. 10 is an SEM image of the surface of the final positive electrode active material manufactured in Comparative Example 2, and FIG. 11 is an SEM image of the surface of the final positive electrode active material manufactured in Comparative Example 3. Referring to FIGS. 6 to 11, the higher the heat treatment temperature, the larger crystal size of the primary particles.

**Evaluation Example 4: Analysis of Aluminium Content on the Surface of Positive Electrode Active Material**

The positive electrode active materials of Examples 1 to 3 and Comparative Examples 1 to 3 were subject to EP-EDS analysis to calculate a ratio of an Al content (e.g., amount) (at%) on the secondary particle surface to 100 at% of a total content (e.g., amount) of Ni, Mn, and Al (Al/(Ni+Mn+Al)) on the secondary particle surface, and the results are shown in Table 2. The EP-EDS analysis was performed by using Ultim (100 mm$^2$ Detector) equipment in Helios G4 HX made by Thermo Fisher Scientific at a voltage of 3 kV and a current of 0.8 nA for 90 seconds.

Table 2

| | Al on secondary particle surface/(Ni+Mn+Al) on secondary particle surface (at%) |
|---|---|
| Comparative Example 1 | 11.2 |
| Example 1 | 9.3 |
| Example 2 | 8.5 |
| Example 3 | 6.8 |
| Comparative Example 2 | 4.5 |
| Comparative Example 3 | 4.2 |

Referring to Table 2, the higher the first heat treatment temperature, the smaller the aluminium content (e.g., amount) on the secondary particle surface. In particular, in Examples 1 to 3 having a first heat treatment temperature of 860 °C to 870 °C, primary particles with a crystal size of 105 nm to 115 nm were formed, wherein a ratio (e.g., amount) of Al content (e.g., amount) (at%) to 100 at% of a total content (e.g., amount) of Ni, Mn, and Al on the secondary particle surface was 5 at% to 10 at%. Comparative Examples 2 and 3 having a relatively high first heat treatment temperature exhibited that the crystal size increased to 115 nm or more, wherein as the first heat treatment temperature increased, the residual lithium was reduced, and accordingly, the ratio of the Al content (e.g., amount) on the secondary particle surface to 100 at% of a total content (e.g., amount) of Ni, Mn, and Al on the secondary particle surface decreased.

**Evaluation Example 5: Evaluation of Initial Charge/discharge Capacity and Efficiency**

The rechargeable lithium battery cell of Examples 1 to 3 and Comparative Examples 1 to 3 were charged to an upper limit voltage of 4.45 V at a constant current of 0.2 C and to 0.05 C at the constant voltage (i.e., 4.45 V) and then, discharged to a cut-off voltage of 3.0 V at 0.2 C at 25 °C for initial charge and discharge. In Table 3, initial charge capacity, initial discharge capacity, and a ratio of the initial discharge capacity to the initial charge capacity as efficiency are provided.

**Evaluation Example 6: High-temperature Cycle-life Characteristics**

After the initial charge and discharge of Evaluation Example 5, the cells were 50 times or more charged and discharged at 1.0 C within a voltage range of 3.0 V to 4.45 V at 45 °C to calculate a ratio (i.e., High-temperature cycle-life) of $50^{th}$ cycle discharge capacity to the initial discharge capacity, and the results are shown in Table 3.

**Evaluation Example 7: Storage Characteristics at High Temperature**

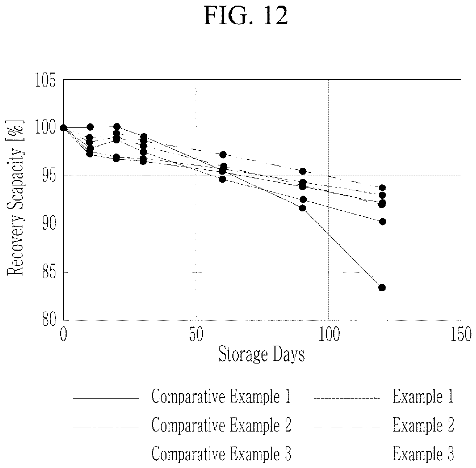

After the initial charge and discharge of Evaluation Example 5, the rechargeable lithium battery cells of Examples 1 to 3 and Comparative Examples 1 to 3 were stored at 60 °C for 120 days and then, once cycled to calculate a ratio of discharge capacity after the cycle to the initial discharge capacity as capacity retention rate and thus evaluate storage characteristics at a high temperature, and the results are shown in FIG. 12.

Table 3

|  | initial charge capacity | initial discharge capacity | Efficiency (%) | High-temperature cycle-life (%, 45 °C, 50cyc) |
|---|---|---|---|---|
|  | (mAh/g) | (mAh/g) |  |  |
| Comparative Example 1 | 229.7 | 195.9 | 85.3 | 95.5 |
| Example 1 | 229.1 | 195.2 | 85.2 | 92.0 |
| Example 2 | 230.8 | 195.7 | 84.8 | 91.3 |
| Example 3 | 230.2 | 196.1 | 85.2 | 90.3 |
| Comparative Example 2 | 229.4 | 196.3 | 85.6 | 83.3 |
| Comparative Example 3 | 229.8 | 198.1 | 86.2 | 76.3 |

Referring to Table 3, compared to Comparative Examples 2 and 3 having a crystal size of 115 nm or more due to a high first heat treatment temperature, Examples 1 to 3 each having a crystal size of 115 nm or less exhibited improved high-temperature cycle-life characteristics. However, Comparative Example 1 also exhibited improved high-temperature cycle-life characteristics but referring to FIG. 12, significantly deteriorated storage characteristics at a high temperature, because Comparative Example 1 had a crystal size of 105 nm or less.

In conclusion, the positive electrode active materials of Examples 1 to 3 including primary particles each with a crystal size of 105 nm to 115 nm, compared to Comparative Examples 1 to 3 including primary particles with a crystal size out of the range, exhibited improved storage characteristics at a high temperature as well as initial charge and discharge efficiency or high-temperature cycle-life characteristics.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this invention has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material comprising:

   a core particle comprising layered lithium nickel-manganese-based composite oxide,
   wherein the core particle is a secondary particle comprising a plurality of primary particles, the plurality of particles being agglomerated with each other, and
   a crystal size of the primary particles is about 105 nm to about 115 nm.

2. The positive electrode active material as claimed in claim 1, wherein
   a nickel content is about 60 mol% to about 80 mol% and a manganese content is greater than or equal to about 10 mol% based on 100 mol% of a total metal excluding lithium in the layered lithium nickel-manganese-based composite oxide.

3. The positive electrode active material as claimed in claim 1 or claim 2, wherein:

   (i) the lithium nickel-manganese-based composite oxide further comprises aluminium, and
   an aluminium content is about 1 mol% to about 3 mol% based on 100 mol% of a total metal excluding lithium in the layered lithium nickel-manganese-based composite oxide; and/or
   (ii) a cobalt content is about 0 mol% to about 0.01 mol% based on 100 mol% of a total metal excluding lithium in the layered lithium nickel-manganese-based composite oxide.

4. The positive electrode active material as claimed in any one of claims 1 to 3, wherein:

   (i) the layered lithium nickel-manganese-based composite oxide is represented by Chemical Formula 1:

   Chemical Formula 1     $Li_{a1}Ni_{x1}Mn_{y1}Al_{z1}M1w_1O_{2-b1}X_{b1}$

   wherein in Chemical Formula 1, $0.9 \leq a1 \leq 1.8$, $0.6 \leq x1 \leq 0.8$, $0.1 \leq y1 \leq 0.4$, $0 \leq z1 \leq 0.03$, $0 \leq w1 \leq 0.3$, $0.9 \leq x1+y1+z1+v1+w1 \leq 1.1$, and $0 \leq b1 \leq 0.1$, $M^1$ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S; and/or
   (ii) an average particle diameter ($D_{50}$) of a plurality of secondary particles comprising the secondary particle is about 10 $\mu$m to about 25 $\mu$m.

5. The positive electrode active material as claimed in any one of claims 1 to 4, wherein
   a coating layer on a surface of the core particle comprises aluminium.

6. The positive electrode active material as claimed in claim 5, wherein
   an aluminum content is about 5 at% to about 10 at% based on a total of 100 at% of nickel, manganese, and aluminum measured by energy profiling energy dispersive spectroscopy (EP-EDS) on the surface of the positive electrode active material.

7. The positive electrode active material as claimed in claim 5 or claim 6, wherein:

   (i) the coating layer comprises a shell that continuously surrounds the surface of the core particles; and/or

(ii) a thickness of the coating layer is about 30 nm to about 500 nm.

8. A method comprising:

mixing nickel-manganese-based composite hydroxide, and a lithium raw material to prepare a mixture; and
heat-treating the mixture at a temperature of about 860 °C to about 870 °C in an oxygen atmosphere,
wherein the method is a method of preparing a positive electrode active material.

9. The method as claimed in claim 8, wherein
in the nickel-manganese-based composite hydroxide, a nickel content is about 60 mol% to about 80 mol%, a manganese content is greater than or equal to about 10 mol%, and a cobalt content is about 0 mol% to about 0.01 mol% based on 100 mol% of a total metal.

10. A method comprising:

adding aluminum raw materials to an aqueous solvent and mixing them to prepare a coating solution;
adding and mixing the layered lithium nickel-manganese-based composite oxide prepared according to the method as claimed in claim 8 or claim 9 into the coating solution to prepare a mixed solution;
removing the aqueous solvent from the mixed solution; and
heat-treating the resulting product to form a coating layer on a surface of the positive electrode active material, wherein the method is a method of preparing the coating layer on the surface of the positive electrode active material.

11. The method as claimed in claim 10, wherein

the aluminium raw materials is aluminium sulfate, and
the heat-treating is performed at about 700 °C to about 850 °C in an oxygen atmosphere.

12. A positive electrode comprising

a positive electrode current collector, and
a positive electrode active material layer on the positive electrode current collector,
wherein the positive electrode active material layer comprises the positive electrode active material as claimed in any one of claims 1 to 7.

13. The positive electrode as claimed in claim 12, wherein:

(i) the positive electrode active material layer has a loading level of about 10 mg/cm$^2$ to about 40 mg/cm$^2$; and/or
(ii) the positive electrode active material layer has a density of about 3.3 g/cc to about 3.7 g/cc.

14. A rechargeable lithium battery, comprising

the positive electrode as claimed in claim 12 or claim 13;
a negative electrode; and
an electrolyte.

15. The rechargeable lithium battery as claimed in claim 14, wherein a charging voltage of the rechargeable lithium battery is greater than or equal to about 4.45 V.

## FIG. 1

FIG. 2
100

FIG. 3

FIG. 4

FIG. 5

## FIG. 6

S4800 5.0kV 8.1mm x20.0k SE(M)          2.00um

FIG. 7

S4800 5.0kV 8.1mm x20.0k SE(M)　　　2.00um

FIG. 8

S4800 5.0kV 7.9mm x20.0k SE(M)          2.00um

FIG. 9

S4800 5.0kV 8.1mm x20.0k SE(M)    2.00um

FIG. 10

S4800 5.0kV 7.9mm x20.0k SE(M)      2.00um

FIG. 11

S4800 5.0kV 7.9mm x20.0k SE(M)    2.00um

FIG. 12

Comparative Example 1 ............ Example 1
Comparative Example 2 — — — Example 2
Comparative Example 3 — — — Example 3

Europäisches Patentamt

European Patent Office

Office européen des brevets

# EUROPEAN SEARCH REPORT

**Application Number**

EP 25 15 2607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 425 703 B1 (LG CHEMICAL LTD [KR]) 11 September 2019 (2019-09-11) | 1-9, 12-15 | INV. C01G53/504 H01M4/36 H01M4/525 |
| Y | * examples * <br> * table 3 * <br> * paragraph [0120] * | 10,11 | |
| X | WO 2023/228957 A1 (SUMITOMO METAL MINING CO [JP]) 30 November 2023 (2023-11-30) <br> * abstract * <br> & EP 4 531 137 A1 (SUMITOMO METAL MINING CO [JP]) 2 April 2025 (2025-04-02) <br> * examples * <br> * table 1 * <br> * claim 5 * <br> * paragraph [0108] * | 1-9, 12-15 | |
| X | EP 4 235 862 A1 (LG ENERGY SOLUTION LTD [KR]) 30 August 2023 (2023-08-30) <br> * examples 1,2 * | 1-9, 12-15 | |
| X | US 2022/411277 A1 (KANG BYUNGWUK [KR] ET AL) 29 December 2022 (2022-12-29) <br> * example 2 * <br> * table 1 * | 8,9 | **TECHNICAL FIELDS SEARCHED (IPC)** <br><br> C01G <br> H01M |
| X | ZHANG HAILIN ET AL: "Surface-Coated LiNi0.8Co0.1Mn0.1O2 (NCM811) Cathode Materials by Al2O3, ZrO2, and Li2O-2B2O3 Thin-Layers for Improving the Performance of Lithium Ion Batteries", FRONTIERS IN MATERIALS, vol. 6, 29 November 2019 (2019-11-29), XP055918496, DOI: 10.3389/fmats.2019.00309 | 8-11 | |
| Y | * par. "Experiment" * | 10,11 | |

-/--

The present search report has been drawn up for all claims

| Place of search | Date of completion of the search | Examiner |
|---|---|---|
| Munich | 30 June 2025 | Omegna, Anna |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 2607

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 518 330 A1 (BASF TODA BATTERY MATERIALS LLC [JP]; GS YUASA INT LTD [JP]) 31 July 2019 (2019-07-31) | 8-11 | |
| Y | * examples * <br> * table 1.1 * <br> - - - - - | 10,11 | |

TECHNICAL FIELDS
SEARCHED      (IPC)

The present search report has been drawn up for all claims

| Place of search | Date of completion of the search | Examiner |
|---|---|---|
| Munich | 30 June 2025 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2607

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | Publication date | Patent family member(s) | | Publication date |
|---|---|---|---|---|---|
| EP 3425703 | B1 | 11-09-2019 | CN | 108028369 A | 11-05-2018 |
| | | | EP | 3425703 A1 | 09-01-2019 |
| | | | JP | 6723545 B2 | 15-07-2020 |
| | | | JP | 2018531500 A | 25-10-2018 |
| | | | KR | 20170103699 A | 13-09-2017 |
| | | | PL | 3425703 T3 | 31-03-2020 |
| | | | US | 2018212237 A1 | 26-07-2018 |
| WO 2023228957 | A1 | 30-11-2023 | CN | 119384732 A | 28-01-2025 |
| | | | EP | 4531137 A1 | 02-04-2025 |
| | | | JP | 2023172365 A | 06-12-2023 |
| | | | KR | 20250011199 A | 21-01-2025 |
| | | | WO | 2023228957 A1 | 30-11-2023 |
| EP 4235862 | A1 | 30-08-2023 | CN | 116670855 A | 29-08-2023 |
| | | | EP | 4235862 A1 | 30-08-2023 |
| | | | JP | 2023553178 A | 20-12-2023 |
| | | | KR | 20220091389 A | 30-06-2022 |
| | | | US | 2024021788 A1 | 18-01-2024 |
| | | | WO | 2022139348 A1 | 30-06-2022 |
| US 2022411277 | A1 | 29-12-2022 | CN | 115548331 A | 30-12-2022 |
| | | | EP | 4112562 A1 | 04-01-2023 |
| | | | JP | 7520917 B2 | 23-07-2024 |
| | | | JP | 2023008932 A | 19-01-2023 |
| | | | US | 2022411277 A1 | 29-12-2022 |
| EP 3518330 | A1 | 31-07-2019 | CN | 109716564 A | 03-05-2019 |
| | | | EP | 3518330 A1 | 31-07-2019 |
| | | | KR | 20190052103 A | 15-05-2019 |
| | | | US | 2019221839 A1 | 18-07-2019 |

EPO FORM P0459

For more details about this annex : see Official Journal of the European Patent Office, No. 12/82